# EUROPEAN PATENT SPECIFICATION

(11) **EP 0 592 218 B1**
(45) Date of publication and mention of the grant of the patent: **12.03.1997**
(21) Application number: 93307978.2
(22) Date of filing: 07.10.1993
(51) Int. Cl.: B60C 9/18, B60C 11/00

(54) **Tyres**
Reifen
Bandages pneumatiques

(30) Priority: 08.10.1992 JP 269998/92; 20.10.1992 JP 281519/92
(43) Date of publication of application: 13.04.1994
(73) Proprietor: Sumitomo Rubber Industries Ltd., Kobe-shi, Hyogo-ken (JP)
(72) Inventor: Saito, Yuichi, Koe-chi, Hyogo-ken (JP); Ohki, Masahiko, Toyota-shi, Aichi-ken (JP); Kikuchi, Naohiko, Akashi-shi, Hyogo-ken (JP)
(74) Representative: Stewart, Charles Geoffrey

(56) References cited:
- FR-A- 2 154 535
- US-A- 3 802 478
- US-A- 4 257 468
- US-A- 4 274 462
- US-A- 4 773 459

## Description

The present invention relates to a tyre having a tread of two layers, i.e. a base tread and a cap tread, and having a low rolling resistance, an excellent steering stability and good ride comfort.

Hitherto, a tyre tread has been modified for improving the rolling resistance of a tyre, its ride comfort and steering characteristics. For example, there is disclosed a technique in which short fibres are blended with a tread rubber (JP-B-5060/1989, JP-B-5608/0989). Further, it is known that a tyre tread can be constructed of two layers, i.e. a cap tread having an excellent wet skid resistance for improving the steering characteristics and a base tread having a low energy loss for lowering the rolling resistance, and a base tread rubber composition for such a cap/base structure has been proposed (JP-A-204637/1984).

A tyre having a cap/base tread structure wherein the base tread comprises short fibres according to the preamble of independent claims 1 and 6 is known for example from US-A- 4274462.

When applying those prior treads, however, though the rolling resistance of a tyre can be lowered, the steering characteristics cannot be improved, and more particularly the handling response is worse which spoils the steering stability.

In addition, since the steering stability is in conflict with ride comfort, there is a problem that, if steering stability is improved, then ride comfort becomes worse.

The present invention has the object of solving the above problems, and provides a tyre having a base tread which has improved steering stability and good ride comfort as well as lower rolling resistance.

Accordingly, a first aspect of the present invention provides a tyre having a tread of cap/base construction, said base tread comprising, per 100 part by weight of a rubber component, 16 to 30 parts by weight of short fibres and 30 to 60 parts by weight of carbon black having an iodine adsorption amount of 60 to 130mg/g, characterised in that the base tread has a thickness of not more than 6mm and 90% or more of the short fibres in the base tread are oriented within an angle range of ± 20° of a particular angle with respect to the peripheral direction of the tyre, and the ratio E*a/E*b of a complex modulus of elasticity E*a in the orientation direction to a complex modulus of elasticity E*b in the direction perpendicular to the orientation direction is not less than 3.

According to another aspect the invention provides a pneumatic radial tyre having a tread of cap/base structure wherein said base tread is prepared from a rubber composition comprising:
(i) a rubber component comprising 50 to 80 parts by weight of natural rubber and 20 to 50 parts by weight of butadiene rubber; and
(ii) 10 to 30 parts by weight of short fibres per 100 parts by weight of the rubber component characterised in that the rubber composition further comprises 5 to 30 parts by weight of carbon black per 100 parts by weight of the rubber component;
said short fibres being oriented in the direction within an angle range of 90° ± 20° with respect to the peripheral direction of the tyre, said base tread having a value of not less than 3 in the ratio E*a/E*b of a complex modulus of elasticity E*a in the orientation direction to a complex modulus of elasticity E*b in the direction perpendicular to the orientation direction, said base tread having a thickness of not more than 6mm, and said tyre having an aspect ratio of not less than 60%.

The tread of the tyre according to the present invention is constructed by the cap tread and the base tread, i.e. cap/base structure. In this tyre, the base tread functions to lower the rolling resistance and to improve the steering stability, and the cap tread functions to endow the desire steering characteristics such as an excellent wet skid resistance and abrasion resistance.

The thickness of the tyre tread components of the present invention is varied with the size of the tyre, and is usually for the base not more than 6mm, preferably not less than lmm at a thickness of the tread crown portion of the finished tyre product. If the thickness is thinner than 1mm, the effects cannot be obtained. When thicker than 6mm, the orientation of the short fibres becomes poor which lowers the handling response, grip characteristic and ride comfort. A preferred thickness is 2 to 5mm.

Embodiments of the present invention will now be described, by way of example only, in conjunction with the attached drawings in which:
Figure 1 shows a schematic perspective view of a base tread in which the short fibres are oriented in the radial direction of the tyre;
Figure 2 shows a schematic perspective view of a base tread in which the short fibres are oriented in the peripheral direction of the tyre;
Figure 3 shows a flow chart for the process for producing a base tread;
Figure 4 shows a schematic perspective view to explain the method to cut out a base tread from a tubular extrudate.

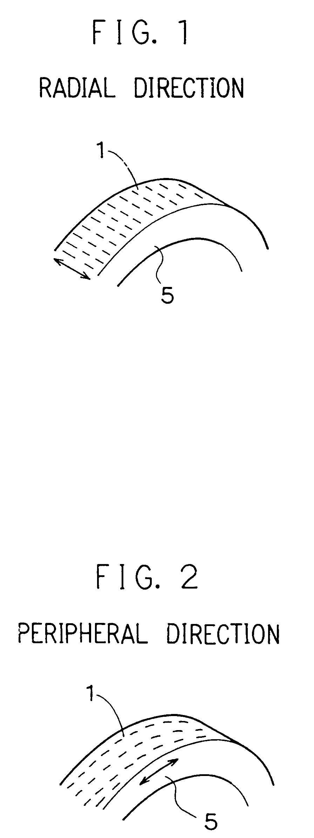

The base tread used in the tyre of Figure 1 comprises, per 100 parts of rubber component, 16 to 30 parts of orientated short fibre as a reinforcing material, 30 to 60 parts of the carbon black have an iodine adsorption amount of 60 to 130mg/g and, if necessary, the other usual additives.

The short fibre has an average diameter D of 0.1 to 0.5 µm, an average length L of 40 to 500 µm and a ratio L/D of 100 to 5000. If the factors are beyond these ranges, the orientation of the fibres is too poor and thus the desired effects cannot be obtained. Preferably, the fibres have an average diameter of 0.2 to 0.4 µm, an average length of 100 to 400 µm and a ratio L/D of 300 to 2000. Examples of the short fibres are, for instance, short fibres of nylon, polyester, rayon, aramid such as Kevlar (Registered Trade Mark of Du Pont), cotton, surface-treated fibres thereof to improve adhesion to the rubber component, and the like. As typical examples of the surface-treated short fibres, there are preferably used short fibres of Nylon 6 which is graft-bonded to natural rubber of the like.

The amount of the short fibres is 16 to 30 parts per 100 parts of the rubber component. If less than 16 parts, though the rolling resistance can be lowered, the handling response is poor. If more than 30, the rolling resistance becomes higher and the ride comfort is poor. The preferred short fibre content is about 20 to 30 parts.

The carbon black has an iodine adsorption amount of 60 to 130mg/g and is contained in the base tread in an amount of 30 to 60 parts per 100 parts of the rubber component. The iodine adsorption amount is, for example, measured according to the method defined in JIS-K-6221-1982 Testing Methods of Carbon Black for Rubber Industry". If the iodine adsorption amount is less than 60mg/g, though the rolling resistance can be improved, the steering stability is poor. If more than 130mg/g, the rolling resistance is poor. The preferred iodine adsorption amount is 65 to 125mg/g. Examples of such a carbon black are, for instance, N351 (iodine adsorption amount: 68mg/g), N339 (90mg/g), N375 (90mg/g), N343 (92mg/g), N299 (108mg/g), ISAF (N220) (121mg/g), N234 (120mg/g) in ASTM, and the like, and preferably ISAF, N351 and N339. In the case of ISAD, the steering stability tends to be enhanced. If the carbon black content is less than 30 parts, the steering stability is worsened. If more than 60 parts, the rolling resistance becomes higher, and also the steering stability tends to be worse. A preferred carbon black content is 30 to 50 parts.

For the rubber component of the base tread, there can be used all rubbers which can be vulcanised to give rubber elastomers, and examples thereof are, for instance, natural rubber (NR), isoprene rubber (IR), emulsion-polymerised styrene butadiene rubber (SBR), solution-polymerised SBR, butadiene rubber (BR), and the like, preferably NR, SBR and BR. These rubbers may be used alone or in an admixture. Preferred combinations are, for example, NR/BR (50 to 80.50 to 20 in weight), and the like.

For the other additives, there may be used vulcanising agents such as sulfur, vulcanisation aids such as zinc oxide and stearic acid, vulcanisation accelerators such as accelerator CZ(N-cyclohexyl-2-benzothiazolsulfenamide) and accelerator NS(N-t-butyl-2-benzothiazolsulfenamide), rubber antioxidants such as rubber antioxidant 13 (N,N'-phenyl-p-phenylenediamine) and rubber antioxidant IPPD(N-isopropyl-N'-phenyl-p-phenylenediamine), process oils such as aromatic oil, naphthene oil and paraffin oil, waxes and the like. Amounts of these additives are not particularly limited.

In order to considerably enhance the desired effects, it is preferable to orient the short fibres in the base tread in a particular direction. As shown in Figure 1, where the short fibres are oriented so that 90% or more of the short fibres in the base tread 1 are oriented in the direction 90° ± 20° with respect to the peripheral direction of the tyre 5, the handling response and the grip characteristic on turning are excellent. The direction of 90° to the peripheral direction of the tyre is hereinafter referred to as the "radial direction".

As shown in Figure 2 when the short fibres are oriented so that 90% or more of the short fibres in the base tread 1 are oriented in the direction within an angle range of ± 20° with respect to the peripheral direction of the tyre 5, the balance of the rolling resistance, the steering stability and the ride comfort is excellent.

Particularly, when a ratio E*a/E*b of the complex modulus of elasticity E*a in the orienting direction to the complex modulus of elasticity E*b in the direction perpendicular to the orienting direction is not less than 3, especially 3 to 5, the desired effects due to the orientation are excellent. The complex modulus of elasticity is measured (under conditions of 10Hz, 70°C, ± 1% dynamic strain) by means of a viscoelastic spectrometer available from Kabushiki Kaisha Iwamoto Seisakusho.

The base tread used may be produced, for example, by the following processes.

### Production Process 1

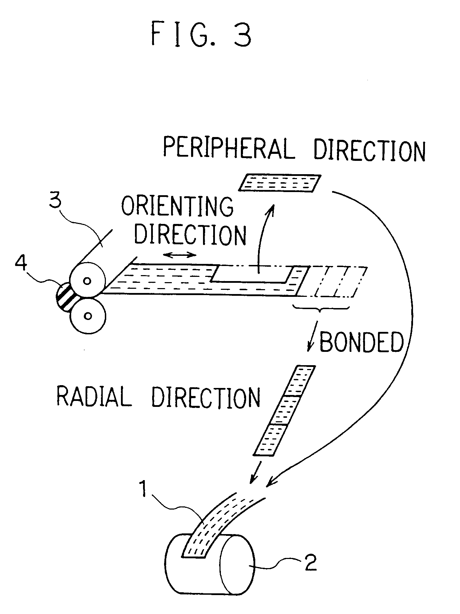

A base tread rubber composition is prepared by mixing the above-mentioned rubber, carbon black, short fibres and other additives in a Banbury mixer. The rubber composition 4 is rolled, as shown in Figure 3, through calender rolls 3 to obtain a sheet having a thickness of 1 to 6mm. When producing a base tread having the peripherally oriented short fibres, a sheet having a given length is cut out longitudinally along the calendering direction. When producing a base tread having the radially oriented short fibres, sheets are cut perpendicularly across the calendering direction rotated and joined to a given length.

### Production Process 2

A base tread and a cap tread are produced simultaneously by extruding a base tread rubber composition prepared by the above-mentioned mixing and a cap tread rubber composition with a well known triple box or Y-box extruder. According to Process 2, a base tread having the peripherally oriented short fibres can be produced.

### Production Process 3

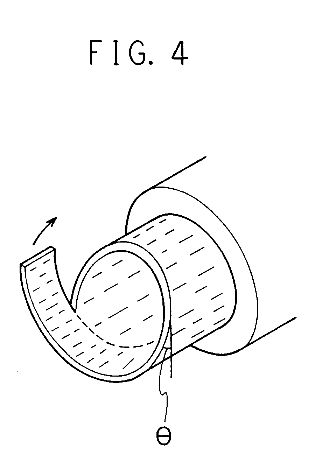

A base tread rubber composition prepared by the above-mentioned mixing is extruded from an extruder to obtain a tubular extrudate, whereby the short fibres in the rubber composition are oriented parallel to the longitudinal direction of the tube. A base tread is produced by spirally cutting out a sheet from the tubular extrudate at a given cutting angle Θ (the angle with respect to the direction perpendicular to the axial of the tube), as shown in Figure 4. In the case that the diameter of the tube is large enough and the cutting angle is small enough, the resultant base tread has the radially oriented short fibres.

The cap tread can be produced by vulcanising a usual rubber composition. For example, such a composition may be a composition comprising solution-polymerised SBR, emulsion-polymerised SBR, NR, IR, BR or a mixture thereof as the main rubber component, to which are added carbon black such as N220 (ISAF) or N110 (SAF), a process oil, a vulcanising agent and the like.

The tyre can be manufactured, for example, in the following manner. First a green tyre is formed by assembling together a carcass, two beads, a chafer and sidewalls on a shaping drum, inflating them to a toroid and adhering a breaker and the above-mentioned base tread and then, thereon a cap tread. In the case of Production Process 2, since the tread consisting of the base tread and the cap tread can be produced in a separate process, the multiple tread is finally adhered. Then the resultant green tyre is put in a mould and vulcanised. The tyre may be finished according to the usual process steps.

Since the technique using the base tread can lower the rolling resistance and improve the steering stability while keeping a good ride comfort, there can be provided a high performance tyre such as a radial tyre, particularly a radial tyre having an aspect ratio of not more than 70%, preferably 35 to 70%.

In a second embodiment a tyre, having an excellent rolling resistance, steering characteristics and ride comfort but with a lower amount of carbon black is described. The tyre has a base tread rubber composition containing, per 100 parts of a rubber component, 10 to 30 parts of short fibres and 5 to 30 parts of carbon black, and 90% or more of said short fibres being oriented within an angle range of ± 20°C with respect to the radial direction, and the ratio E*a/E*b being not less than 3.

Possible rubber components for the base tread are the same as the rubber components used in the embodiment. Among them, NR and BR are preferred, and particularly a rubber component comprising a mixture of 50 to 80 parts of NR and 20 to 50 parts of BR is suitable.

For the carbon black, there can be used carbon blacks having an iodine adsorption amount of 30 to 90mg/g, preferably 40 to 85mg/g. If the iodine adsorption amount is less than 30mg/g, the tread is inferior in strength and in cutting resistance because of a too low reinforcing effect. If more than 90mg/g, the heat generation of the tyre becomes large to increase the rolling resistance. Preferred carbon blacks are N550 (FEF) (iodine adsorption amount: 43mg/g), N330 (HAF) (82mg/g), N351 (68mg/g), and the like, which are available from Showa Cabott Co Limited or Mitsubishi Kasei Corporation. Particularly preferable carbon black is N550. The amount of the carbon black is 5 to 30 parts per 100 parts of the rubber component. If less than 5 parts, the base tread is inferior in mechanical strength because of a too low reinforcing effect, and if more than 30 parts, the heat generation of the tyre becomes too large and increases the rolling resistance.

The materials of the short fibres are the same as those in the first embodiment. Once again they preferably have an average length L of not less than 30 µm, particularly 50 to 500 µm, and an average diameter D of 0.1 to 0.5 µm. The ratio L/D is preferably not less than 50, particularly 100 to 5000. If the ratio is less than 50, the resulting rubber cannot be endowed with the desired orientation of short fibres.

The amount of the short fibres is 5 to 30 parts, preferably 10 to 25 parts per 100 parts of the rubber component. If less than 5 parts, the steering stability cannot be improved, and if more than 30 parts, both the rolling resistance and the ride comfort become worse.

It is important to orient 90% or more of the short fibres within an angle range of the radial direction (i.e. 90° to the peripheral direction) 20°, whereby the rigidity in the radial direction, i.e. the traverse rigidity of the tyre can be increased, and the handling response and the grip characteristic can be improved. If the short fibres are not oriented in the given direction, the above-mentioned traverse rigidity cannot be obtained, and thus the steering stability cannot be improved. The ratio E*a/E*b is not less than 3, preferably 3 to 5, as if the ratio E*a/E*b is less than 3, the steering stability cannot be improved.

The rubber composition may contain the same process oils, rubber antioxidants, waxes, vulcanising aids, and vulcanising agents as in the first embodiment.

The radial tyre of the second embodiment can be manufactured according to the manufacturing process of the first embodiment in which the short fibres in the base tread are oriented in the radial direction, excepting that for the base tread rubber composition. Typically preferably, the base tread may be produced according to production Process 2.

It is important in the second embodiment to restrict the thickness of the base tread to not more than 6mm, preferably 1 to 6mm, and the aspect ratio to not less than 60%, whereby the particular orientation direction of the short fibres can be ensured, and a good balance of the steering stability and rolling resistance can be kept. If the thickness is more than 6mm, a good orientation of the short fibres cannot be obtained and the rolling resistance becomes worse.

The present invention is more specifically described and explained by means of the following Examples. The present invention, however, is not limited to the Examples. In the following Examples, Comparative Examples and Tables, "part" represents "part by weight".

### EXAMPLE 1

A base tread rubber composition was prepared by mixing a mixture of 40 parts of natural rubber (NR RSS#3), 20 parts of styrene-butadiene copolymer rubber (SBR1500), 60 parts of NR reinforced with 33% by weight of Nylon 6 fibre having a number average diameter of 0.3 µm, a number average length of 300 µm and a L/D of 1000 (UBEPOL-HE available from UBE Industries Limited), 40 parts of carbon black (ISAF) having an iodine adsorption amount of 121mg/g, 3 parts of process oil (aromatic oil), 2 parts of rubber antioxidant (antioxidant 13), 2 parts of stearic acid, 3 parts of zinc oxide, 1.75 parts of vulcanising agent (sulfur) and 1 part of vulcanising accelerator (CZ), in a Banbury mixer. The rubber composition 4 was calendered with the calender rolls 3 as shown in Figure 3 to prepare a sheet. A base tread 1 was produced by cutting the sheet in the direction perpendicular to the calendering direction, and bonded.

On a building drum, a carcass, two beads, a chafer and two sidewalls which were separately produced were assembled and inflated to shape them into a toroid. A breaker was attached and a base tread 1 and cap tread to obtain a green tyre. The green tyre was vulcanised in a mould, and was finished according to the usual process steps to manufacture the radial tyre (205/60R15) of the present invention.

The thickness of the base tread of the tyre was 4mm at maximum and 3.5mm on average. The short fibres in the base tread were oriented in the radial direction of the tyre. The complex modulus of elasticity E*a in the orienting direction was 210kgf/cm² and the complex modulus of elasticity E*b in the direction perpendicular to the orienting direction was 50kgf/cm², and a ratio E*a/E*b was 4.2.

The composition of the base tread and the structure of the tyre as shown in Table 1.

The rolling resistance, steering characteristics (handling response and grip characteristic) and ride comfort of the tyre were measured according to the following methods. The results are shown in Table 2.

### (Rolling Resistance)

The above-mentioned tyre was attached to a rim of 6 - ½J x 15, and the rolling resistance was measured by causing the tyre to run on a 60 inch drum under conditions of 80Km/hr in speed, 2.0kgf/cm² inflation pressure and 350kg in load. The rolling resistance was represented in the Table as an index to the value of Comparative Example 1. The smaller the value, the more excellent the rolling resistance characteristic.

### (Steering Stability Characteristics and Driving Comfort)

The above-mentioned tyre were fitted to a 2000cc passenger car, and the car was run on the JARI total testing road with one passenger and an air pressure of 1.8kgf/cm². The results are shown as a relative value to the value of Comparative Example 1 regarded as standard value 3.0. Subjective assessment with respect to each estimation is shown, and the larger the value, the better. In Table, "+" mark attached to the right shoulder of a figure means being somewhat superior, and "-" mark means being somewhat inferior.

### EXAMPLE 2

The base tread rubber composition shown in Table 1 and the same cap tread rubber composition as in Example 1 were extruded from a triple box extruder to produce a cap-base tread.

On a building drum, a carcass, two beads, a chafer and two sidewalls which were separately produced were assembled and shaped into a toroid. A breaker was attached and a base tread 1 and cap tread were adhered to complete a green tyre. The green tyre was vulcanised in a mould, and was finished according to the usual process steps to manufacture a radial tyre size 205/60R15.

The thickness of the base tread of the tyre was 4mm at a maximum and 3.5mm on average. The short fibres in the base tread were oriented in the radial direction of the tyre. The complex modulus of elasticity E*a in the orienting direction was 210kgf/cm² and the complex modulus of elasticity E*b in the direction perpendicular to the orienting direction was 50kgf/cm², and the ratio E*a/E*b was 4.2.

The rolling resistance, steering characteristics (handling response and grip characteristic) and ride comfort of the tyre were measured in the same manner as in Example 1. The results are shown in Table 2.

### EXAMPLES 3 AND 4

The same procedures as in Example 1 were repeated except that the base tread rubber compositions shown in Table 1 were employed to produce radial tyres having a base tread in which the short fibres were oriented in the radial direction. The base tread of Example 3 has a maximum thickness of 4mm and an average thickness of 3.5mm, and the base tread of Example 4 has a maximum thickness of 2.5mm and an average thickness of 2.2mm.

With respect to the tyres, the rolling resistance, handling response, grip characteristic and ride comfort were measured according to the same manner as in Example 1. The results are shown in Table 2.

### EXAMPLE 5

The same procedures as in Example 4 were repeated except that the base tread rubber composition shown in Table 1 was employed to produce a radial tyre having a base tread in which the short fibres were oriented radially and the thickness was the same as that of Example 4. The radial tyre had the same size as of Example 4.

The tyre was subjected to the same tests as in Example 1. The results are shown in Table 2.

### COMPARATIVE EXAMPLE 1

A radial tyre (without a base tread) of the same size as Example 1 was manufactured by extruding a cap tread at a large thickness according to production Process 2, and then it was vulcanised.

The tyre was subjected to the same tests as in Example 1. The results are shown in Table 2.

### COMPARATIVE EXAMPLE 2

A radial tyre of the same size as Example 2 was manufactured in the same manner as in Example 2 except that base tread rubber composition without a short fibre shown in Table 1 was employed. The tyre tread had a maximum thickness of 4mm and an average thickness of 3.5mm.

The tyre was subjected to the same tests as in Example 1. The results are shown in Table 2.

### COMPARATIVE EXAMPLES 3 AND 4

Radial tyres of the same size as Example 1 having a base tread in which the short fibres were radially oriented were manufactured in the same manner as in Example 1 except that the base tread rubber compositions shown in Table 1 were employed. The base treads of both Comparative Examples 3 and 4 had a maximum thickness of 4mm and an average thickness of 3.5mm.

The tyres were subjected to the same tests as in Example 1. The results are shown in Table 2.

### COMPARATIVE EXAMPLE 5

A base tread rubber composition shown in Table 1 was prepared by mixing in the same manner as in Example 1. The rubber composition was extruded from an extruder to obtain a tubular extrudate having a wall thickness of 8mm. A base tread was produced by cutting the tubular extrudate spirally as shown in Figure 4.

A radial tyre of the same size as Example 1 having the base tread in which the short fibres were oriented almost radially was manufactured according to the same manner as in Example 1. The base tread had a maximum thickness of 7mm and an average thickness of 6.3mm.

The tyre was subjected to the same tests as in Example 1. The results are shown in Table 1.

### COMPARATIVE EXAMPLE 6

A radial tyre of the same size as Example 1 having a base tread in which the short fibres were radially oriented was manufactured in the same manner as in Example 1 except that the base tread rubber composition shown in Table 1 was employed. The thickness of the base tread was the same as Example 1. The ratio E*a/E*b, i.e. the complex modulus of elasticity E*a in the radial direction to the complex modulus of elasticity E*b in the direction perpendicular thereto was less than 3.

The tyre was subjected to the same tests as in Example 1. The results are shown in Table 2.

### COMPARATIVE EXAMPLE 7

A radial tyre of the same size as Example 3 having the base tread in which the short fibres were radially oriented was manufactured in the same manner as in Example 3 except that the base tread rubber composition was as shown in Table 1. The thickness of the base tread was the same as Example 3.

The tyre was subjected to the same tests as in Example 1. The results are shown in Table 2.

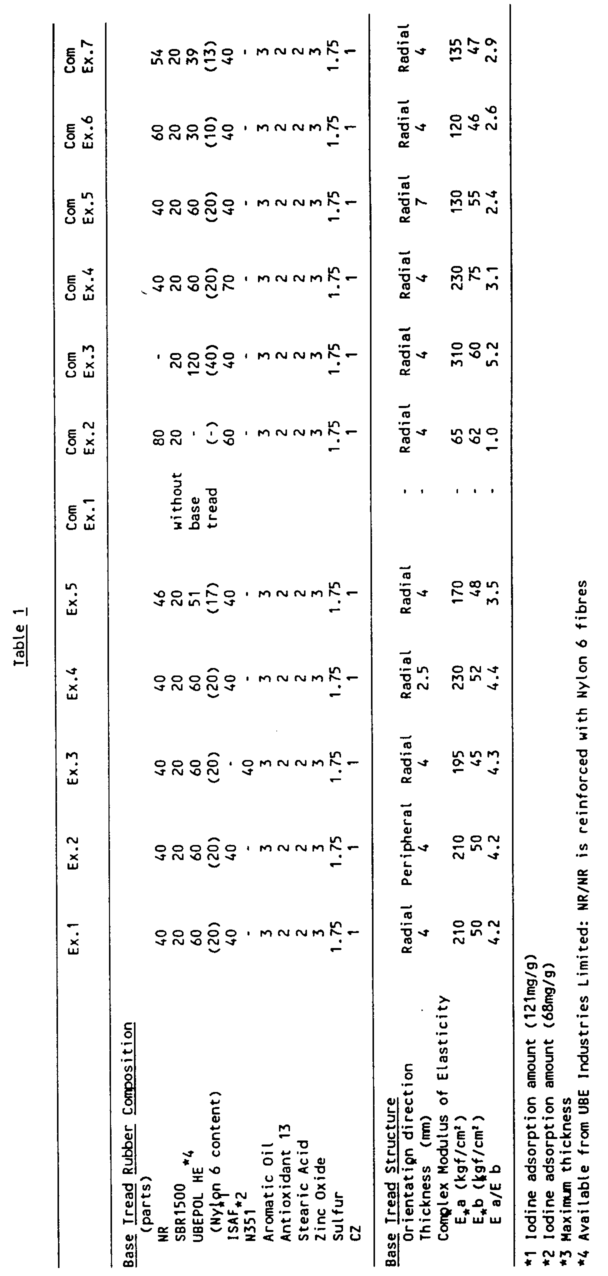

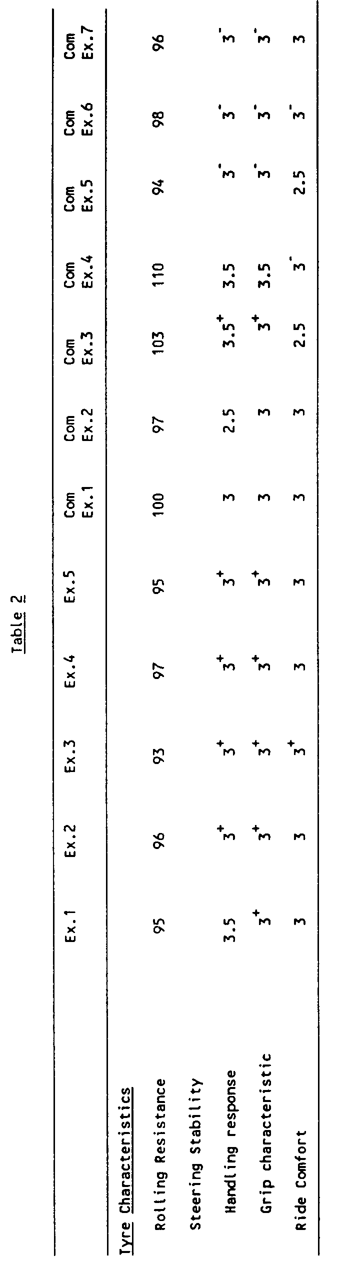

From Tables 1 and 2 the following can be seen.

From Comparative Example 2, by utilising a base tread having no short fibre, though the rolling resistance is low, the handling response is poor.

From Comparative Example 3, by utilising a base tread containing more than 40 parts of the short fibres gives a rolling resistance too large and makes the ride comfort poor.

From Comparative Example 4, even if a proper amount of short fibres is blended, when the carbon black is blended in the large amount of 70 parts, the rolling resistance becomes considerably greater which makes the ride comfort bad.

From Comparative Example 5, even if a proper amount of the short fibres and a proper amount of the carbon black are blended, when the base tread has a large thickness of 7mm, the handling response, the grip characteristic and the ride comfort are insufficient.

In Comparative Example 6, since the short fibres are blended in a small amount of 10 parts, the steering stability is bad.

In contrast the tyres of Examples 1 to 5 have a low rolling resistance and an excellent handling response, grip characteristic and ride comfort.

Also in Examples 1 and 2, when the orientation of the short fibres in the base tread is in the radial direction, the handling response is particularly improved.

Further, from Examples 1 and 3, when using N351 as carbon black instead of ISAF, the rolling resistance is lowered.

### EXAMPLES 6 TO 10

Base tread rubber compositions were prepared by using the following components.

| Components | Amounts (parts) |
|---|---|
| Rubber component | Table 3 |
| Short fibre | Table 3 |
| Carbon black | Table 3 |
| Naphthene oil | 5 |
| Adhesive resin (SP 1068) | 3 |
| Wax | 1.5 |
| Antioxidant (antioxidant IPPD) | 2 |
| Stearic acid | 2 |
| Zinc oxide | 4 |
| Sulfur | 2 |
| Vulcanising accelerator CZ | 1.3 |

A rubber composition sheet having a thickness of 2 to 6mm was prepared in the same manner as in Example 1, being calendered on calender rolls having a width of 2m or more. From the calendered sheet, a sheet having the required width for the tread was cut across the orientation of the short fibres to produce a base tread. The base tread was adhered to a breaker which was mounted on a tyre building drum, and a cap tread was adhered thereon. The assembly was then vulcanised to manufacture a radial tyre (185/65R14). The values of E*a, E*b and E*a/E*b of the base treads are shown in Table 3. The thicknesses of the base treads were equally 4mm and the aspect ratios of both tyres were 65%. The tyres were fitted to a rim (6 JJ x 14 inch), and were subjected to the following tests. The results are shown in Table 4.

In Table 3, FRR is NR reinforced with short fibres having a number average length of 300 µm, a number average diameter of 0.3 µm and a L/D of 1000 (UBEPOL-HE available from UBE Industries Limited), and N550 (FEF), N330 (HAF) and N220 (ISAF) are carbon blacks having iodine adsorption amounts of 43mg/g, 82mg/g and 121mg/g, respectively.

### (1) Rolling Resistance

The rolling resistance was measured by running the tyre on a 60 inch drum at 80Km/hr, 2.5kgf/cm² inflation pressure and 350kg load. The rolling resistance was represented in the Tables as an index to the value of Comparative Example 8. The smaller the value, the better the rolling resistance characteristic.

### (2) Steering Stability Characteristics

The above-mentioned tyres were fitted to a 1600cc passenger car, and the car was run circularly on a dry asphalt road with one passenger and an air pressure of 1.8kgf/cm². The results are shown as a relative value to the value of Comparative Example 8 regarded as standard value 3.0. Subjective assessment for each factor is shown, and the larger the value, the better. In Table, "+" mark attached to the right shoulder of a figure means being somewhat superior, and "-" mark means being somewhat inferior.

### (3) Drive Comfort

Under the same conditions as above (2), a ride comfort factors such as vibration, shock or damping were estimated by running on a Belgian-type road and a bitumen road. The results are the same as in the above test (2).

### COMPARATIVE EXAMPLES 8 TO 13

Base treads having short fibres oriented in the directions shown in Table 3 were produced in the same manner as in Example 6 except that the rubber compositions shown in Table 3 were employed, and then radial tyres were manufactured in the same manner as in Example 6.

The tyres were subjected to the same tests as in Example 6. The results are shown in Table 4.

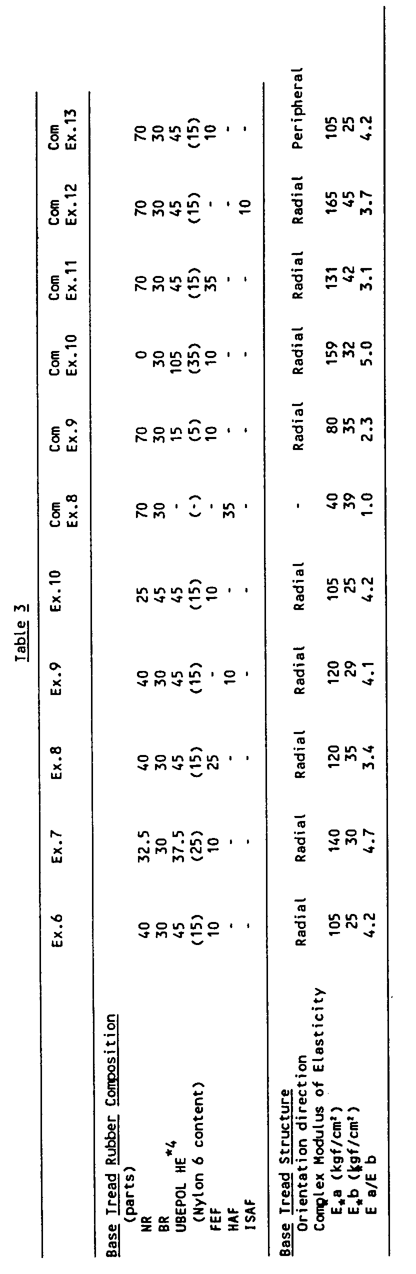

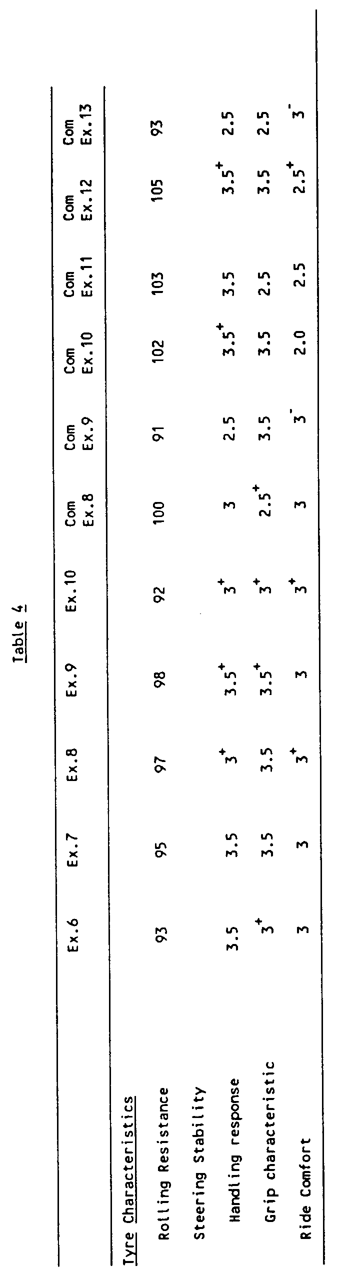

As is clear from Tables 3 and 4, the balance of the rolling resistance, the steering stability and the ride comfort of the radial tyres of Examples 6 to 10 is superior so that of Comparative Examples 8 to 12. The steering stability of the radial tyre of Comparative Example 13 in which the short fibres are oriented in the peripheral direction is apparently inferior to that of the tyre of Example 6 in which the short fibres are oriented in the radial direction.

As explained above, since the tyre of the present invention has a low rolling resistance, dynamic energy loss can be reduced to save fuel consumption. In addition, the tyre has improved steering stability such as handling response or grip characteristic, while maintaining a good ride comfort.

## Claims

1. A tyre having a tread of cap/base construction, said base tread comprising, per 100 part by weight of a rubber component, 16 to 30 parts by weight of short fibres and 30 to 60 parts by weight of carbon black having an iodine adsorption amount of 60 to 130mg/g, characterised in that the base tread has a thickness of not more than 6mm and 90% or more of the short fibres in the base tread are oriented within an angle range of ± 20° of a particular angle with respect to the peripheral direction of the tyre, and the ratio E*a/E*b of a complex modulus of elasticity E*a in the orientation direction to a complex modulus of elasticity E*b in the direction perpendicular to the orientation direction is not less than 3.

2. The tyre of claim 1, characterised in that the short fibres in the base tread are oriented within an angle range of 90° ± 20° to the peripheral direction of the tyre.

3. The tyre of claim 1, characterised in that 90% or more of the short fibres in the base tread are oriented within an angle range of 0° ± 20° with respect to the peripheral direction of the tyre.

4. The tyre of claim 1, 2 or 3, characterised in that the short fibres have a number average diameter D of 0.1 to 0.5 µm, a number average length L to 50 to 500 µm and a L/D of 100 to 5000.

5. The tyre of claim 1, 2, 3 or 4, characterised in that the tyre is a radial tyre having an aspect ratio of not more than 70%.

6. A pneumatic radial tyre having a tread of cap/base structure wherein said base tread is prepared from a rubber composition comprising:
(i) a rubber component comprising 50 to 80 parts by weight of natural rubber and 20 to 50 parts by weight of butadiene rubber; and
(ii) 10 to 30 parts by weight of short fibres per 100 parts by weight of the rubber component characterised in that the rubber composition further comprises 5 to 30 parts by weight of carbon black per 100 parts by weight of the rubber component;
said short fibres being oriented in the direction within an angle range of 90° ± 20° with respect to the peripheral direction of the tyre, said base tread having a value of not less than 3 in the ratio E*a/E*b of a complex modulus of elasticity E*a in the orientation direction to a complex modulus of elasticity E*b in the direction perpendicular to the orientation direction, said base tread having a thickness of not more than 6mm, and said tyre having an aspect ratio of not less than 60%.

7. The radial tyre of claim 6, characterised in that the iodine adsorption amount of the carbon black is 30 to 90mg/g.

8. The radial tyre of claim 6 or 7, characterised in that the short fibres have an average diameter D of 0.1 to 0.5 µm, an average length L of 50 to 500 µm and a L/D of 100 to 5000.

## Patentansprüche

1. Ein Reifen mit einer Lauffläche mit einem Deck/Basisaufbau, wobei die Basislauffläche pro 100 Gewichtsteile einer Gummikomponente 16 bis 30 Gewichtsteile kurze Fasern und 30 bis 60 Gewichtsteile Ruß mit einer Jodadsorptionsmenge von 60 bis 130 mg/g aufweist, dadurch gekennzeichnet, daß die Basislauffläche eine Dicke von nicht mehr als 6 mm hat und 90 % oder mehr der kurzen Fasern in der Basislauffläche innerhalb eines Winkelbereichs von ± 20° eines speziellen Winkels bezüglich der Umfangsrichtung des Reifens orientiert sind und das Verhältnis E*a/E*b eines komplexen Elastizitätsmoduls E*a in der Orientierungsrichtung zu einem komplexen Elastizitätsmodul E*b in der zur Orientierungsrichtung senkrechten Richtung nicht geringer als 3 ist.

2. Der Reifen nach Anspruch 1, dadurch gekennzeichnet, daß die kurzen Fasern in der Basislauffläche innerhalb eines Winkelbereichs von 90° ± 20° zur Umfangsrichtung des Reifens orientiert sind.

3. Der Reifen nach Anspruch 1, dadurch gekennzeichnet, daß 90 % oder mehr der kurzen Fasern in der Basislauffläche innerhalb eines Winkelbereichs von 0° ± 20° bezüglich der Umfangsrichtung des Reifens orientiert sind.

4. Der Reifen nach Anspruch 1, 2 oder 3, dadurch gekennzeichnet, daß die kurzen Fasern einen Durchschnittsdurchmesser D von 0,1 bis 0,5 µm, eine Durchschnittslänge L von 50 bis 500 µm und ein L/D von 100 bis 5.000 aufweisen.

5. Der Reifen nach Anspruch 1, 2, 3 oder 4, dadurch gekennzeichnet, daß der Reifen ein Radialreifen mit einem Längenverhältnis von nicht mehr als 70 % ist.

6. Ein Radialluftreifen mit einer Lauffläche mit einem Deck/Basisaufbau, worin die Basislauffläche aus einer Gummizusammensetzung hergestellt ist, umfassend:
(i) eine Gummikomponente mit 50 bis 80 Gewichtsteilen Naturgummi und 20 bis 50 Gewichtsteilen Butadien-Gummi; und
(ii) 10 bis 30 Gewichtsteile kurze Fasern pro 100 Gewichtsteile der Gummikomponente, dadurch gekennzeichnet, daß die Gummizusammensetzung ferner 5 bis 30 Gewichtsteile Ruß pro 100 Gewichtsteile der Gummikomponente aufweist;
wobei die kurzen Fasern in der Richtung innerhalb eines Winkelbereichs von 90° ± 20° bezüglich der Umfangsrichtung des Reifens orientiert sind, die Basislauffläche einen Wert von nicht weniger als 3 in dem Verhältnis E*a/E*b eines komplexen Elastizitätsmoduls E*a in der Orientierungsrichtung zu einem komplexen Elastizitätsmodul E*b in der zur Orientierungsrichtung senkrechten Richtung aufweist, wobei die Basislauffläche eine Dicke von nicht mehr als 6 mm hat und der Reifen ein Längenverhältnis von nicht weniger als 60 % aufweist.

7. Der Radialreifen nach Anspruch 6, dadurch gekennzeichnet, daß die Jodadsorptionsmenge des Rußes 30 bis 90 mg/g beträgt.

8. Der Radialreifen nach Anspruch 6 oder 7, dadurch gekennzeichnet, daß die kurzen Fasern einen Durchschnittsdurchmesser D von 0,1 bis 0,5 µm, eine Durchschnittslänge L von 50 bis 500 µm und ein L/D von 100 bis 5.000 aufweisen.

## Revendications

1. Pneumatique possédant une bande de roulement ayant une construction à chape et base, la bande de roulement de base contenant, pour 100 parties en poids d'un ingrédient de caoutchouc, 16 à 30 parties en poids de fibres courtes et 30 à 60 parties en poids de noir de carbone ayant un indice d'adsorption d'iode de 60 à 130 mg/g, caractérisé en ce que la bande de roulement de base a une épaisseur qui ne dépasse pas 6 mm, et 90 % des fibres courtes au moins de la bande de roulement de base sont orientées dans une plage angulaire de ±20° autour d'un angle particulier par rapport à la direction périphérique du pneumatique, et le rapport E*a/E*b du module complexe d'élasticité E*a dans la direction de l'orientation au module complexe d'élasticité E*b en direction perpendiculaire à la direction d'orientation n'est pas inférieur à 3.

2. Pneumatique selon la revendication 1, caractérisé en ce que les fibres courtes de la bande de roulement de base sont orientées dans une plage angulaire de 90° ± 20° par rapport à la direction périphérique du pneumatique.

3. Pneumatique selon la revendication 1, caractérisé en ce que 90 % au moins des fibres courtes de la bande de roulement de base sont orientées dans une plage angulaire de 0° ± 20° par rapport à la direction périphérique du pneumatique.

4. Pneumatique selon la revendication 1, 2 ou 3, caractérisé en ce que les fibres courtes ont un diamètre moyen en nombre D compris entre 0,1 et 0,5 µm, une longueur moyenne en nombre L comprise entre 50 et 500 µm, et un rapport L/D compris entre 100 et 5 000.

5. Pneumatique selon la revendication 1, 2, 3 ou 4, caractérisé en ce qu'il forme un pneumatique à carcasse radiale ayant un rapport d'allongement qui ne dépasse pas 70 %.

6. Pneumatique à carcasse radiale possédant une bande de roulement ayant une structure à chape et base, dans lequel la bande de roulement de base est préparée à partir d'une composition de caoutchouc qui contient :
(i) un ingrédient de caoutchouc contenant 50 à 80 parties en poids de caoutchouc naturel et 20 à 50 parties en poids de caoutchouc de butadiène, et
(ii) 10 à 30 parties en poids de fibres courtes pour 100 parties en poids de l'ingrédient de caoutchouc,
caractérisé en ce que la composition de caoutchouc comporte en outre 5 à 30 parties en poids de noir de carbone pour 100 parties en poids de l'ingrédient de caoutchouc,
les fibres courtes étant orientées dans une direction comprise dans une plage angulaire de 90° ± 20° par rapport à la direction périphérique du pneumatique, la bande de roulement de base ayant une valeur qui n'est pas inférieure à 3 pour le rapport E*a/E*b du module complexe d'élasticité E*a dans la direction d'orientation au module complexe d'élasticité E*b en direction perpendiculaire à la direction d'orientation, la bande de roulement de base ayant une épaisseur qui ne dépasse pas 6 mm, le pneumatique ayant un rapport d'allongement qui n'est pas inférieur à 60 %.

7. Pneumatique à carcasse radiale selon la revendication 6, caractérisé en ce que l'indice d'adsorption d'iode du noir de carbone est compris entre 30 et 90 mg/g.

8. Pneumatique à carcasse radiale selon la revendication 6 ou 7, caractérisé en ce que les fibres ont un diamètre moyen D compris entre 0,1 et 0,5 µm, une longueur moyenne L comprise entre 50 et 500 µm, et un rapport L/D compris entre 100 et 5 000.
